# EUROPEAN PATENT SPECIFICATION

(11) **EP 3 213 230 B1**
(45) Date of publication and mention of the grant of the patent: **23.10.2019**
(21) Application number: 15791176.9
(22) Date of filing: 29.10.2015
(51) Int. Cl.: G06F 16/28, G06F 16/22, G06F 16/23

(54) **EFFICIENT MAINTENANCE OF COLUMN STORE INDEXES ON MEMORY-OPTIMIZED TABLES**
EFFIZIENTE INSTANDHALTUNG VON SPALTENSPEICHERINDIZES AUF SPEICHEROPTIMIERTEN TABELLEN
MAINTENANCE EFFICACE D'INDEX DE MAGASIN DE COLONNES DANS DES TABLES OPTIMISÉES EN TERMES DE MÉMOIRE

(30) Priority: 31.10.2014 US 201414530226
(43) Date of publication of application: 06.09.2017
(73) Proprietor: Microsoft Technology Licensing, LLC, Redmond, WA 98052-6399 (US)
(72) Inventor: RIDER, Devin Leo, Redmond, Washington 98052-6399 (US); PAPADIMOS, Vasileios, Redmond, Washington 98052-6399 (US); ZHANG, Xin, Redmond, Washington 98052-6399 (US); BIRKA, Adrian, Redmond, Washington 98052-6399 (US); LARSON, Per-Åke, Redmond, Washington 98052-6399 (US); DIACONU, Cristian, Redmond, Washington 98052-6399 (US)
(74) Representative: Grünecker Patent- und Rechtsanwälte PartG mbB
(86) International application number: PCT/US2015/057918
(87) International publication number: WO 2016/069818

(56) References cited:
- EP-A1- 2 660 735
- US-A1- 2011 219 020
- US-A1- 2012 166 400

## Description

### BACKGROUND

The structure of database management systems that are efficient for processing transactional data may at times be in opposition to those structures efficient for processing analytical queries. As a result, there may at times be architectural distinctions between database management systems designed for use in processing transactional data and data warehouse systems designed for performing analytical queries. Various systems, sometimes referred to as operational data warehouses, may comprise mechanisms adapted for use in scenarios where both transactional data processing and analytical queries are to be performed.

EP 2 660 735 A1 discloses a multi-level storage architecture and deleting a data record from the second level storage or main storage. A data record is defined by a row ID. A delete operation includes performing a lookup for the data record in a table using its row ID.

US 2011/0219020 A1 discloses a columnar storage of a database index. The column store includes an absence flag array which includes entries whether certain rows have been logically deleted from the column store.

The object of this invention is to provide an improved database management system, a corresponding computer-readable storage medium, and a corresponding method.

### SUMMARY

A system and method for database management is disclosed herein. The system may include one or more computing devices that, when activated, maintain a table in a plurality of structures stored on one or more memories. The plurality of structures may include a row store and a column store, and the row store may include a row of the table associated with an identifier indicative of a location in the column store corresponding to the row The column store may include a subset of values for a column of the table. The system may include one or more memories having computer readable instructions that, upon execution by a computing device, cause the one or more computing devices to receive a request to store a modified version of the row. The instructions may cause the system to add, to a first plurality of records, a first record indicative of a logically deleted state for values in the column store corresponding to the row. The instructions may further cause the system to add the modified version of the row to the row store and modify the identifier to indicate that the column store does not contain a location corresponding to the modified version of the row. Finally, the instructions may cause the system to add, to a second plurality of records, a second record indicative of the modified version of the row not having been propagated to the column store.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

The foregoing Summary, as well as the following Detailed Description, is better understood when read in conjunction with the appended drawings. In order to illustrate the present disclosure, various aspects of the disclosure are shown. However, the disclosure is not limited to the specific aspects discussed. The following figures are included:
FIG. 1 is a diagram to illustrate an aspect of a system with improved update performance in transactional and data warehouse applications.
FIGS. 2A and 2B are flowcharts to illustrate aspects of a memory that contains instructions to improve update performance.
FIG. 3 is a diagram to illustrate an aspect of preventing a user transaction from aborting due to a system transaction.
FIG. 4 is a block diagram of a computing environment including a computing device operable to support aspects of computer-implemented methods, computer program products, and system components as illustrated in FIGS. 1-3.

### DETAILED DESCRIPTION OF ILLUSTRATIVE EMBODIMENTS

A memory optimized storage mechanism may be used for efficient online transaction processing ("OLTP"). Another storage mechanism may be used for efficient data warehousing and analytics-related processing. In some cases the shared data sets may need to be processed efficiently with the simultaneous usage of both mechanisms. An Operational Data Warehouse ("ODW") may be described as a system that may be used for efficient processing of both transactional and analytical operations. A system comprising both mechanisms is described herein. The system may further include a mechanism for maintenance of data contained in the system, which may include hybrid storage mechanisms adapted for ODW scenarios. Maintenance may include transfer of rows stored in a structure held in volatile memory to another structure held in non-volatile memory, or from structures held in row-oriented data stores to column-oriented data stores.

In the following description, operational terms such as "update," "delete," "insert," "scan," and "seek" are used in the following description for the purpose of providing relative reference only, and are not intended to suggest any limitations. Thus, these descriptions are merely general database operational processing terms and it is well known that other terms may also be used to depict similar operational meaning in a database system.

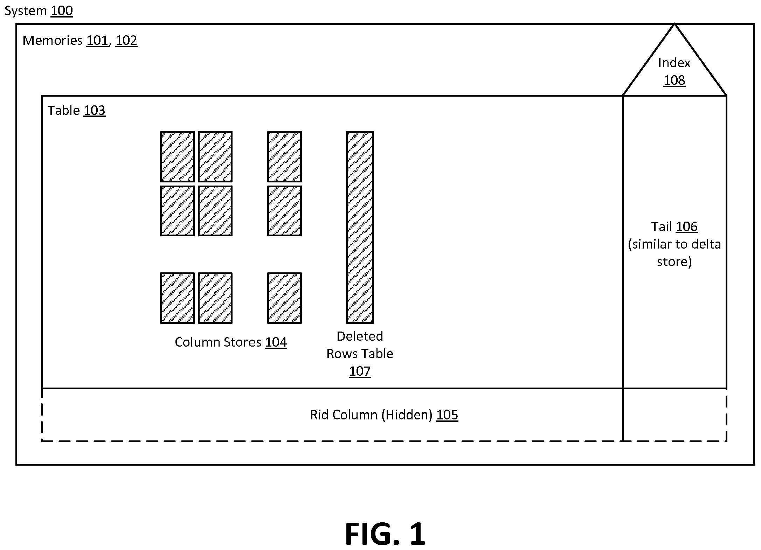

Referring now to FIG. 1, in one aspect, a data management system 100 is disclosed with improved update and maintenance performance in transactional and data warehouse applications. The system 100 may comprise one or more computing devices (not shown) that, when activated, maintain a table in a plurality of structures stored on one or more memories 101 and 102. The structures may comprise a row store and a column store. The row store may comprise a row of the table associated with an identifier indicative of a location in the column store corresponding to the row. The column store may comprise a subset of values for a column of the table. In some cases, a row store may be maintained in a volatile memory and a column store may be maintained in a non-volatile memory.

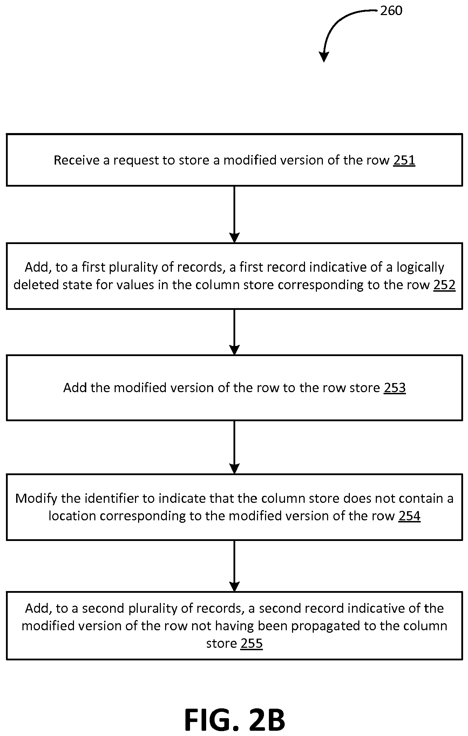

The system 100 may be also be comprised of one or more memories having computer readable instructions stored thereon (not shown) that may be executed by the one or more computing devices, cause the system 100 to perform steps of an example operational procedure 260 as illustrated in FIG. 2B. Referring to FIG. 2B, operation 251 illustrates receiving a request to store a modified version of the row. Operation 252 illustrates adding, to a first plurality of records, a first record indicative of a logically deleted state for values in the column store corresponding to the row. The first plurality of records may be described as a deleted rows table, although it may be implemented in a wide variety of structures. These structures may generally be row-oriented structures. While in the logically deleted state, the modified version of the row may be treated by system 100 as invisible to a scan or seek operation.

Operation 253 illustrates adding the modified version of the row to the row store. Operation 254 illustrates modifying the identifier to indicate that the column store does not contain a location corresponding to the modified version of the row. Operation 255 illustrates causing the addition, to a second plurality of records, of a second record indicative of the modified version of the row not having been propagated to the column store. The second plurality of records may, for example, comprise an index referring to a tail of the row store. Rows in the row store may be in an unpropagated state. When a row is propagated, those columns of the row that are to be stored in the column store may be physically copied to a location within the column store. Those records referred to by the tail may, however, be treated by system 100 as logically included in the column store, even though not yet propagated.

In some aspects, the second plurality of records may comprise a row-oriented structure and may be indicative of a plurality of rows that are logically included in the column store but have not been propagated to the column store. Examples of a row-oriented store include tables or indexes which may be optimized for row-oriented retrieval.

In some aspects, system 100 may include instructions that cause the system 100 to identify a propagation state of the modified version of the row in the row store based at least in part on locating the modified version of row in the second plurality of records. Furthermore, the instructions may cause the system 100 to store the modified version of the row in the column store. The modified version of the row in the column store may be associated with information indicative of an invisible state for the modified version of the row in the column store. The invisible state may refer to the accessibility, in response to scan or seek operations, of the copy of the modified version of the row in the column store. Note that when used in the context of the column store, the term row may refer to whatever subset of columns of a row are to be stored in the column store, and may not in all cases refer to the row in its entirety. Certain columns of a row may, in various aspects, be excluded from storage in the column store.

The instructions may cause the system 100 to store, in the first plurality of records, a second record comprising a second identifier indicative of a location in the column store corresponding to the modified version of the row. The second record in the first plurality of records may be indicative of a logically deleted state of the modified version of the row in the column store. The instructions may cause the system 100 to associate the modified version of the row in the column store with information indicative of a visible state in the column store in response to completion of a transaction pending at a time the second record was stored in the first plurality of records. The instructions may also cause the system 100 to associate the modified version of the row in the row store with the second identifier indicative of a location in the column store corresponding to the modified version of the row. The instructions may also cause the system 100 to remove the second record from the first plurality of records. In some aspects the second record may be removed, thereby reverting the logically deleted state of the modified version of the row in the column store.

In some aspects, system 100 may include instructions that cause the system 100 to select the row for propagation to the column store based at least in part on a frequency of requests associated with modifying the row, and to determine the frequency based at least in part on performing a linear regression performed on variables comprising a timestamp and a time value corresponding to the timestamp. Additionally, in another aspect, associating the modified version of the row in the row store with the second identifier indicative of a location in the column store may not be logged, and the system 100 may include instructions that cause the system 100 to recover the second identifier based at least in part on locating the modified version of the row in the column store and associating the modified version of the row in the row store with the recovered second identifier.

In one aspect, the first record may comprise information indicative of a range of values in the column store that are in a logically deleted state. This may, for example, be done to reduce the number of entries needed to represent rows in the column store that are in the logically deleted state, which may in turn reduce logging overhead where additions to the first plurality of records, i.e., the deleted rows table, are logged.

In some aspects, system 100 may include instructions that cause the system 100 to associate an operation performed on at least one of the row store, the column store, the first plurality of records, or the second plurality of records with a first transaction. The first transaction may be associated with information indicative of the first transaction being initiated by the system. Furthermore, the first transaction may be caused to abort in response to receiving a request to access the row in a context of a second transaction initiated by a client and it may be determined that the first transaction has not been committed.

In some aspects, system 100 may include instructions that cause the system 100 to, in response to a determination to scan the column store, perform a merge operation based at least in part on merging values in the column store, information in the first plurality of records indicative of logically deleted states, and information in the second plurality of records indicative of rows that have not been propagated to the column store, wherein the merge operation is performed relative to a timestamp. The merge operation may combine performing a join operation between the column store and the deleted rows table, in order to subtract deleted rows, and combining the result of the join with the tail portion of the row store, since that portion represents rows not yet propagated to the column store.

In another aspect, system 100 may be comprised of one or more volatile memories 101 and one or more non-volatile memories 102. The system 100 may further be comprised of one or more memories having computer readable instructions stored thereon that may be executed by one or more computing devices (not pictured). The instructions may cause the system 100 to select a row from a plurality of rows stored in the volatile memory 101. The selected row may be in a ready state for migration from the volatile memory 101 to the non-volatile memory 102. In an alternative aspect, the instructions may instruct the system 100 to select more than one row at a time.

Further, the system 100 may store the selected row in the non-volatile memory 102 such that the row is associated with information that is indicative of an invisible state for the row. An identifier may be formed by the system 100 and may be used subsequently to locate the row in the non-volatile memory 102. In at least one of the volatile memories 101 or non-volatile memories 102, information may be stored that is indicative of a deleted state for the row. The deleted state may, however, be described as a pseudo-deleted state, because the row or a subset of columns from the row is to be propagated from volatile memories 101 to non-volatile memories 102, rather than deleted from the table. More generally, the row or a subset of columns from the row may be propagated from a row store to a column store. Propagating a row or a subset of columns from a row may comprise a copying of the row from the row store to the column store. In various cases, the row-oriented store may be maintained in volatile memories 101 and the column store may be maintained in non-volatile memories 102. Propagation may also be referred to as or include migrating, copying, compressing, or duplicating the row or a subset of columns from the row. The information indicative of the pseudo-deleted state may be comprised of both the identifier and a timestamp. The information may be stored in a context of a first transaction.

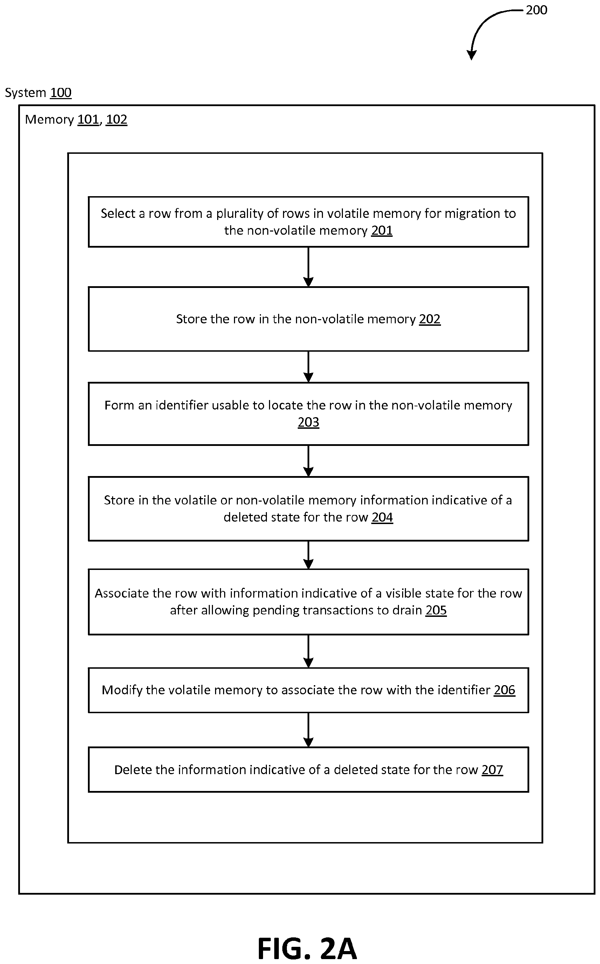

The system 100 may modify the volatile memory 101 to associate the row with the identifier and further may delete the information indicative of a deleted state for the row. In various aspects, a delta store and a delete bitmap may be present in a database management system similar to the system 100 as described herein. However, a delta store and delete bitmap may be omitted in some cases. Further details depicting the system 100 with improved update performance may be described in FIG. 2A below.

In another particular aspect, a method is disclosed with improved update performance in transactional and data warehouse applications. The method may be implemented, in some aspects, in system 100 comprising one or more volatile memories 101 and one or more non-volatile memories 102. The one or more memories may further have stored thereon computer readable instructions that may be executed by one or more computing devices (not pictured). The method may include selection of a row from a plurality of rows stored in the volatile memory 101. The selected row may be in a ready state for migration from the volatile memory 101 to the non-volatile memory 102. In an alternative aspect, more than one row may be selected at a time.

Further, the method may include storing the selected row in the non-volatile memory 102 such that the row is associated with information that is indicative of an invisible state for the row. An identifier may be generated and may be used to locate the row in the non-volatile memory 102. In at least one of the volatile memories 101 or non-volatile memories 102, information may be stored that is indicative of the deleted state for the row. The information may be comprised of both the identifier and a timestamp. The information may be stored in a context of a first transaction. In response to a completed first transaction, an additional transaction may be pending at a time the first transaction was committed. The additional transaction may be allowed to complete. This may be described as allowing pending transactions to drain prior to making the row visible in the non-volatile memory. Subsequent to the drain, the row may then be associated with information indicative of a visible state for the row.

The method may include modifying the volatile memory 101 to associate the row with the identifier. Furthermore, the information indicative of a deleted state for the row may be deleted. In some aspects, a delta store and a delete bitmap may be present in a database management system. However, in other aspects, the delta store and delete bitmap may be omitted. Further details depicting the method with improved update performance may be described in FIG. 2A below.

In another aspect, a computer readable storage medium for improved update performance in transactional and data warehouse applications is disclosed. The computer readable storage medium may store thereon computer readable instructions that, when executed by one or more processors of a computing system, cause the selection of a row from a plurality of rows stored in the volatile memory 101. The selected row may be in a ready state for migration from the volatile memory 101 to the non-volatile memory 102. In some aspects, more than one row may be selected at a time.

Further, the medium may include instructions for storing the selected row in the non-volatile memory 102 such that the row is associated with information that is indicative of an invisible state for the row. An identifier may be generated and may be used to locate the row in the non-volatile memory 102. In at least one of the volatile memories 101 or non-volatile memories 102, information may be stored that is indicative of the deleted state for the row. The information may comprise the identifier and a timestamp. The information may be stored in a context of a first transaction. When the first transaction is complete, an additional transaction may be pending at a time the first transaction was committed. Accordingly, the row may then be associated with information indicative of a visible state for the row.

The medium may include instructions for modifying the volatile memory 101 to associate the row with the identifier. The medium may also include instructions for deleting the information indicative of a deleted state for the row. In some aspects, a delta store and a delete bitmap may be present in a database management system similar to the medium as described herein. However, in some aspects, the additions of a delta store and delete bitmap may not be implemented. Further details depicting the medium with improved update performance may be described in FIG. 2A below.

Referring now to FIG. 2A and further referencing FIG. 1, a flowchart 200 is illustrated. The flowchart 200 shows instructions as set forth and executed by at least one computing device in the data warehouse system 100. Referring to block 201, the system 100 may be caused to select a row from a plurality of rows stored in volatile memory 101. The selection of the row may be based on the row being in a ready state for migration to the non-volatile memory 102. The plurality of rows may be stored in a row-wise fashion. The plurality of rows may be stored in at least one or more tables 103 and each table 103 may be implemented in ordered fashion (e.g., as a B-tree) or unordered fashion (e.g., as a heap). A helper index may be used to scan the tail of the table 103 to assist in the selection of the row. In various cases, the tail of the table 103 may primarily comprise rows that have not yet been propagated.

In block 201, the selection of the row in the volatile memory 101 may be selected based on the row being associated with information that may indicate the row is in a non-propagated state. In an aspect, the information may include a timestamp along with an identifier. Block 204 describes the content of the information that the row is associated with.

Referring again to block 201, the selection of the row may be based on the frequency of updates. In the system 100, the selected row may be in a state where it has not been frequently updated. In an aspect, the rows that have not been frequently updated may be best suited to be selected by the system 100 for migration from the volatile memory 101 to the non-volatile memory 102. In this way, the system 100 may implement a threshold value that approximately identifies the cold rows from the plurality of rows in the volatile memory 101. A threshold value may be represented by a value (e.g., one million rows). The cold rows may be described in the system 100 as rows that have not been changed for a predetermined time. These cold rows may be the selected rows used in block 201 to propagate from the volatile memory 101 to the non-volatile memory 102. The migration of rows from the volatile memory 101 to the non-volatile memory 102 may be triggered by several events beyond a threshold value. In another example, the migration may be triggered by determining that a time period has elapsed (e.g., one hour), or receiving a user command (e.g., database administrator command) to perform the migration. The above examples of the triggering events for causing the migration are not intended to suggest any limitations. It may be possible to include other triggering events to replace the examples outlined above.

Block 202 includes storing the selected row in the non-volatile memory 102. The selected row may be associated with information that indicates an invisible state for the row. An invisible state for the row may create a scenario where concurrent scans may not locate or identify the selected row. In other words, the selected row may be prevented or withheld from visibility to any concurrent scans by the system 100. In an instance where a crash occurs in the system 100, the invisibly selected row may stay hidden. The selected row and one or more additional rows may be combined to form a record, where the record may be compressed when stored in the non-volatile memory 102. Similar to the selected row, the one or more additional rows may also be selected from the plurality of rows stored in the volatile memory 101. The compressed record which includes the selected row and the one or more additional rows may be stored in a column store 104 in the non-volatile memory 102. The column store 104 may store the record in a column-wise fashion.

Block 203 illustrates forming an identifier that may be used to locate the row in the non-volatile memory 102. The identifier may indicate a position of the row within a column group. For example, the identifier may be a key value that indicates the position of the row in the column store 104. As another example, the identifier may also be a row identifier (RID). In some aspects, the RID may be a physical row identifier consisting of a row group identifier and a Tuple identifier. The RID may, in some aspects, be represented by a numerical value that may indicate the position of the row in the column store 104. The RID values may be stored in a hidden column in table 103 and thus, may be hidden from user visibility. The hidden column may be referred to as RID column 105. For example, if the RID value in the RID column 105 is "-1," the system 100 may find the value to be invalid. However, the invalid indication allows the system 100 to recognize that the selected row is not yet compressed or migrated from the volatile memory 101 to the non-volatile memory 102. In other words, the invalid RID value may indicate that the row is in the non-propagated state. In another example, an internally constructed index 108 in the system 100 may also assist the system 100 in locating the rows with the RID value of "-1." The internally constructed index 108 may be a filtered hash index. A filtered hash index may construed to be just one example and is not intended to suggest any limitations of the type of index that may be used for the internally constructed index 108.

Block 204 illustrates storing information indicative of a deleted state for the row in at least one or both the volatile 101 and non-volatile memory 102. The information may include the identifier and also a timestamp. A timestamp may be indicated by a numerical value. For example, the value of "10" may be assigned and associated with the row as the timestamp. The value of the timestamp may assist the system 100 during scans. The rows associated with a timestamp value that may not meet a certain or predicated value as set forth by a user or by the system itself may be filtered out or disregarded during the scan. As a further example, a scan as of timestamp "10' will not see a delete of the row that occurred as of timestamp "11." Further, the information may be stored in a context of a first transaction. If the first transaction has not yet been committed, the system 100 may cause the first transaction to abort in the instance where a second transaction is initiated by a user or client. A second transaction may occur when the request is initiated by the user or client requesting access to the same selected row. Referring again to block 204, the information indicative of a deleted state for the row may be stored in an additional table 107 that may not be user-visible. In other words, the system 100 is performing a pseudo-delete. The pseudo-delete may occur when the row is being moved or deleted from the table 103 and being inserted into the additional table 107. This additional table 107 may contain identifiers of rows in the column store 104 that have been logically deleted from the first table 103. As described above, the identifier may be a key value or a RID value. In other words, the additional table 107 may be a deleted rows table 107. The deleted rows table 107 may act similarly to a delete bitmap from prior aspects of a database warehouse system and store identifiers of the rows that are logically deleted from the table 103. Thus, in an aspect, the deleted rows table 107 or a portion of the deleted rows table 107 may still be converted to a delete bitmap and function similarly as a delete bitmap. In some aspects, instead of utilizing a delete bitmap where timestamps associated with each row are not saved, the use of a deleted rows table 107 may allow the system 100 to identify versions or saved states of each row. In this way, snapshot semantics may be implemented.

Block 205 illustrates responding after the completion of the first transaction and while an additional transaction is pending. With the first transaction committed, an additional transaction may be pending, and when the first transaction is completed, information indicative of a visible state for the row may be associated with the selected row. The selected row may transform or change from the invisible state to a visible compressed state. For further example, the first transaction may be committed when information indicative of a deleted state of a row includes information comprising the identifier and a timestamp is stored in the deleted rows table 107. An additional transaction may be pending until the latest active timestamp of the additional transaction reaches the commit timestamp of the first transaction. The waiting or pending period may be accomplished by establishing a transaction drain - any transaction that may be active when the first transaction commits may be associated with a dependency from the transaction drain. When the additional transaction or the last such transaction commits, aborts, or enters validation, the system 100 may make a call back to a drain object. The system 100 may then queue a new thread to change the state of the row from invisible to visible and to perform the functions of block 206 and 207 below. This example may be accomplished such that no transaction can observe data in the new row group(s).

Block 206 illustrates modifying the volatile memory 101 to associate the row with the identifier. The identifier may assist the system 100 to identify the row to be modified.

Block 207 illustrates performing a delete of the information indicative of a deleted state for the row.

Certain aspects may cause large amounts of log data to be written. For example, the migration of one million rows may result in the generation of three million log records. One record may be generated per row during inserts into the deleted row table 107. One record may be generated per row during deletes from the deleted row table 107. One record may be generated per row during updates to the RID column of the table 103. Aspects may improve log efficiency through the system 100 by optimizing away almost all of this logging overhead. Log records for the deleted row table 107 may be optimized by identifying that both inserts and deletes during data migration happen in ranges of Tuple IDs within the same Row Group ID. For example, inserts occur for all Tuple IDs between 1 and N (for N around 1,000,000) within a given row group and deletes may occur in the range around 1 and 1000 tuples.

Thus, in an aspect, the system 100 may be altered to apply a schema to the deleted rows table 107. Instead of storing RIDs, the system 100 may include three columns: a Row Group ID, a begin tuple ID within the row group, and an end tuple ID within the row group.

The range index on the deleted rows table 107 becomes an index on the first two columns. The meaning of a row in the deleted rows table 107 is that every RID with specified Row Group ID and with Tuple ID within the specified range of IDs may be considered deleted.

Inserts of one record may occur into the deleted rows table 107 for each portion of RIDs that one transaction will operate on. Furthermore, a delete of one record may occur from then deleted rows table 107 when the row is changed from the invisible to the compressed visible state. The corresponding one record may include a range and the RID values in the table 103 may be updated with the most up to date RID values that correspond to the range of the record. If any write-write conflicts happen, a single record will be inserted into deleted rows table 107 to re-hide the row that could not be propagated because of such a conflict.

Hence, the above described optimization may assist in the reduction of the number of log records on deleted rows table 107. In some aspects, optimization may decrease the amount from two million to about two thousand log records.

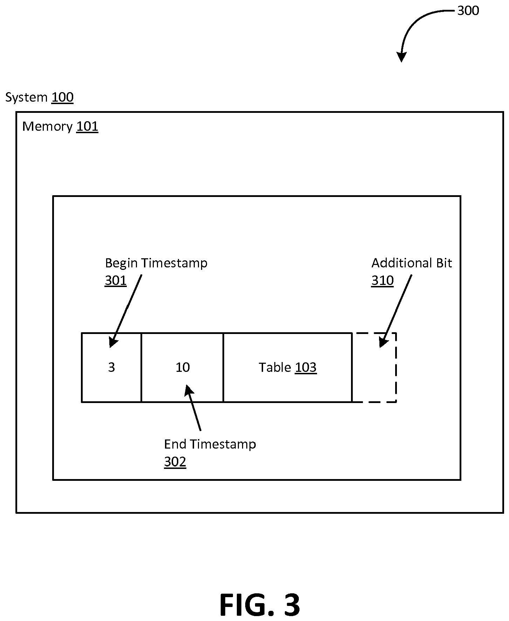

Referring now to FIG. 3, a table 103 with timestamps (301, 302) in the system 100 is shown. In diagram 300, the example of implementing a threshold value in system 100 is further described. In each table 103 and for each row, a timestamp may be associated with the row when the row was created. These transactional timestamps may be mapped to real time. As such, a background thread (not depicted) may be created that periodically determines the current transaction timestamp. The data for the last N such timestamps may be saved on the system 100. N may be a configuration parameter to the algorithm as described herein. After compiling the data, a best-fit line may be built using a least-squares linear approximation that allows an approximate translation of a transaction timestamp into the number of previous periods ago a timestamp was current. A period may refer to a periodic task.

A temporal histogram (not depicted) may be built such that the histogram approximately specifies how many rows in the tail of the table 103 are within a particular period. All periods younger than N time ago may be lumped together. When a new row is inserted into the tail of the table 103, an increment of one is added into the latest period of the histogram. On the other hand, when a row is deleted from the tail of the table 103, the created timestamp may be translated into the time period using the linear approximation mentioned above. Hence, a decrease of one is subtracted from that period in the histogram. When the periodic background thread described above is run, the histogram may be shifted by one period (such that the two oldest periods may be combined and a newest period may be introduced with initially zero rows). The implementation may use a circular array to keep track of periods, such that each array element may be a partitioned counter. Partitioning may allow reducing contention on the counter between different threads.

As described in block 201, when a data migration background task checks whether data migration is warranted, the background task may receive information from the above histogram regarding the number of rows in the oldest period. Thus, if the number exceeds a threshold (e.g., one million), migration of the selected row may be invoked from the volatile memory 101 to the non-volatile memory 102. In an alternative embodiment, if the size of the histogram is N and the time period for the background task that advances the histogram is T seconds, then In one aspect, T = 30 seconds and N = 120 may result in a one hour threshold for row migration.

The begin timestamp 301 of each row may be checked and the rows that are visible to it may not be migrated and compressed unless it is older than the oldest timestamp saved in the manner described above. In addition, any row with a non-infinite end timestamp 302 may be skipped, even if it is visible to the data migration transaction and has a very old begin timestamp value. It may not be beneficial to the system 100 to propagate such a row because it may end up causing a write-write conflict. A write-write conflict may occur when the data migration transaction updates the row before the user transaction may access the row. In some aspects, propagating a row with a write-write conflict may be avoided. For one example, the system 100 may add a bit 310 to the end timestamp of the table 103 which will identify whether the update was done by background data migration.

Thus, if a user transaction requests an update to a row R but discovers that its end timestamp is set to a timestamp E which has the above bit 310 turned on, the user transaction may seek the row again, using E as the visibility timestamp. This will allow the system 100 to find the new row R' that the data migration transaction inserted when it deleted the row R. The user transaction may then update R' instead. The background transaction does not change anything except the hidden RID field, so R and R' may contain the same user data.

Further, if a user transaction requests an update to a row R but discovers that its end timestamp is in doubt, (e.g., R was updated by a transaction T that has not yet been committed) the system 100 may check whether T is a system data migration transaction. If T is a system data migration transaction, there may be two instances for the system 100 to perform.

The first instance may occur if T already obtained a commit timestamp, the user transaction may then proceed as described above, using the commit timestamp of T instead of the end timestamp of the row. This will cause the user transaction to take a commit dependency on T, but otherwise function the same way as described above. However, if T aborts, the user transaction may still abort.

The second instance may occur if T has not yet obtained a commit timestamp, the user transaction may force T to abort. In an aspect, the system 100 can wait for T to abort before proceeding; however, in other aspects, if non-blocking is desired, the system 100 may proceed with its own update (overriding what T did). With this alternate aspect, the system 100 data migration code may include post-processing logic to handle the race condition between T undoing its own changes and the user transaction undoing them.

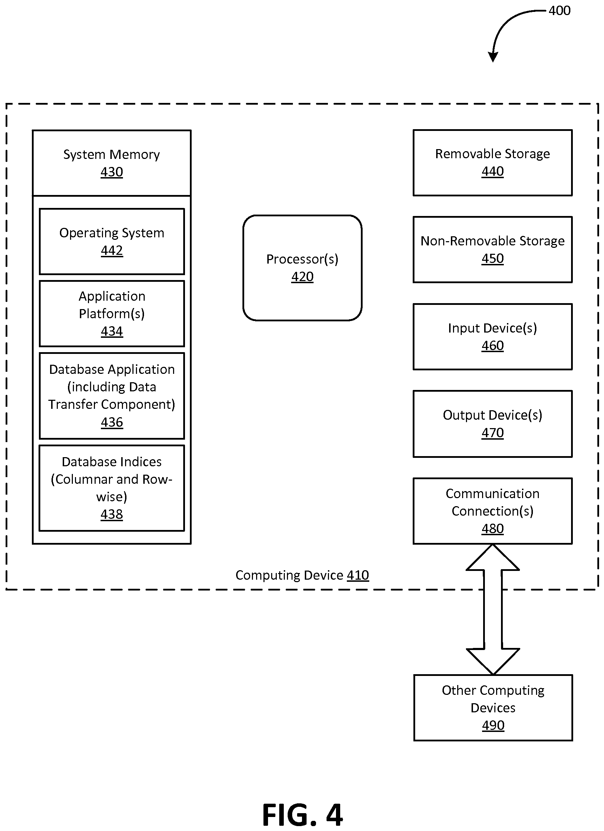

FIG. 4 depicts a block diagram of a computing environment 400 including a computing device 410 operable to support aspects of computer-implemented methods, computer program products, and system components according to the present disclosure. In an illustrative aspect, the computing device 410 may include one or more of the tables 103 of FIG. 1, the column store 104 of FIG. 1, and the deleted rows table 107 of FIG. 1. Each of the tables 103 of FIG. 1, the column store 104 of FIG. 1, and the deleted rows table 107 of FIG. 1 may include or be implemented using the computing device 410 or a portion thereof.

The computing device 410 includes at least one processor 420 and a system memory 430. Depending on the configuration and type of computing device, the system memory 430 may be volatile (such as random access memory or "RAM"), non-volatile (such as read-only memory or "ROM," flash memory, and similar memory devices that maintain stored data even when power is not provided), or some combination of the two. The system memory 430 typically includes an operating system 432, one or more application platforms 434, one or more applications, and program data. For example, the system memory 430 may include a database application 436 and database indices 438 (e.g., columnar indices and row-wise indices).

In an illustrative aspect, the database application 436 may include a data transfer component. In another illustrative aspect, the processor 420 may be configured to execute a query processing engine to execute database queries of the database application 436 that reference both columnar database indices and row-wise database indices.

The computing device 410 may also have additional features or functionality. For example, the computing device 410 may also include removable and/or non-removable additional data storage devices such as magnetic disks, optical disks, tape, and standard-sized or flash memory cards. Such additional storage is illustrated in FIG. 4 by removable storage 440 and non-removable storage 450. The system memory 430, the removable storage 440 and the non-removable storage 450 are all examples of computer storage media. Any such computer storage media may be part of the computing device 410.

The computing device 410 may also have input device(s) 460, such as a keyboard, mouse, pen, voice input device, touch input device, etc. Output device(s) 470, such as a display, speakers, printer, etc. may also be included. The computing device 410 also contains one or more communication connections 480 that allow the computing device 410 to communicate with other computing devices 490 over a wired or a wireless network.

It will be appreciated that not all of the components or devices illustrated in FIG. 4 or otherwise described in the previous paragraphs are necessary to support aspects as herein described. For example, the removable storage 440 may be optional.

It should be understood that the various techniques described herein may be implemented in connection with hardware or software or, where appropriate, with a combination of both. The subject matter presented herein may be implemented as a computer process, a computer-controlled apparatus or a computing system or an article of manufacture, such as a computer-readable storage medium.

The techniques, or certain aspects or portions thereof, may, for example, take the form of program code (i.e., instructions) embodied in tangible storage media or memory media implemented as storage devices, such as magnetic or optical media, volatile or non-volatile media, such as RAM (e.g., SDRAM, DDR SDRAM, RDRAM, SRAM, etc.), ROM, etc., that may be included in computing devices or accessible by computing devices. When the program code is loaded into and executed by a machine, such as a computer, the machine becomes an apparatus for practicing the disclosure. In the case of program code execution on programmable computers, the computing device generally includes a processor, a storage medium readable by the processor (including volatile and non-volatile memory and/or storage elements), at least one input device, and at least one output device. One or more programs that may implement or utilize the processes described in connection with the disclosure, e.g., through the use of an application programming interface ("API), reusable controls, or the like. Such programs are preferably implemented in a high level procedural or object oriented programming language to communicate with a computer system. However, the program(s) can be implemented in assembly or machine language, if desired. In any case, the language may be a compiled or interpreted language, and combined with hardware implementations.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

The scope of the invention is defined in the following claims.

## Claims

1. A database management system with improved update performance in transactional and data warehouse applications, the system comprising:
one or more computing devices that, when activated, maintain a table in a plurality of structures stored on one or more memories, the plurality of structures comprising a row store and a column store, the row store comprising a row of the table associated with an identifier indicative of a location in the column store corresponding to the row, the column store comprising a subset of values for a column of the table;
one or more memories having stored thereon computer readable instructions that, upon execution by the one or more computing devices, cause the system at least to:
receive (251) a request to store a modified version of the row;
add (252), to a first plurality of records, a first record indicative of a logically deleted state for values in the column store corresponding to the row;
add (253) the modified version of the row to the row store and modify (254) the identifier to indicate that the column store does not contain a location corresponding to the modified version of the row;
add (255), to a second plurality of records, a second record indicative of the modified version of the row not having been propagated to the column store;
identify a propagation state of the modified version of the row in the row store based at least in part on locating the modified version of row in the second plurality of records;
store the modified version of the row in the column store, wherein the modified version of the row in the column store is associated with information indicative of an invisible state for the modified version of the row in the column store;
store, in the first plurality of records, a second record comprising a second identifier indicative of a location in the column store corresponding to the modified version of the row, the second record in the first plurality of records being indicative of a logically deleted state of the modified version of the row in the column store;
associate the modified version of the row in the column store with information indicative of a visible state in the column store in response to completion of a transaction pending at a time the second record was stored in the first plurality of records;
associate the modified version of the row in the row store with the second identifier indicative of a location in the column store corresponding to the modified version of the row; and
remove the second record from the first plurality of records, wherein removing the second record from the first plurality of records corresponds to reverting the logically deleted state of the modified version of the row in the column store.

2. The system of claim 1, wherein the second plurality of records comprises a row-oriented structure and is indicative of a plurality of rows that are logically included in the column store but have not been propagated to the column store.

3. The system of claim 1 or 2, further comprising one or more memories having stored thereon computer-readable instructions that, upon execution, cause the system at least to:
select (201) the row for propagation to the column store based at least in part on a frequency of requests associated with modifying the row; and
determine the frequency based at least in part on performing a linear regression performed on variables comprising a timestamp and a time value corresponding to the timestamp.

4. The system of claim 1, wherein associating the modified version of the row in the row store with the second identifier indicative of a location in the column store is not logged, the system further comprising one or more memories having stored thereon computer-readable instructions that, upon execution, cause the system at least to:
recover the second identifier based at least in part on locating the modified version of the row in the column store and associating the modified version of the row in the row store with the recovered second identifier.

5. The system of any of claims 1-4, wherein the first record comprises information indicative of a range of values in the column store that are in a logically deleted state.

6. The system of any of claims 1-5, further comprising one or more memories having stored thereon computer-readable instructions that, upon execution, cause the system at least to:
associate an operation performed on at least one of the row store, the column store, the first plurality of records, or the second plurality of records with a first transaction.
associate the first transaction with information indicative of the first transaction being initiated by the system; and
cause the first transaction to abort in response to receiving a request to access the row in a context of a second transaction initiated by a client and determine that the first transaction has not been committed.

7. The system of any of claims 1-6, further comprising one or more memories having stored thereon computer-readable instructions that, upon execution, cause the system at least to:
in response to a determination to scan the column store, perform a merge operation based at least in part on merging values in the column store, information in the first plurality of records indicative of logically deleted states, and information in the second plurality of records indicative of rows that have not been propagated to the column store, wherein the merge operation is performed relative to a timestamp.

8. A method for efficient updates in transactional and data warehouse applications, the method comprising:
maintaining a table in a plurality of structures stored on one or more memories, the plurality of structures comprising a row store and a column store, the row store comprising a row of the table associated with an identifier indicative of a location in the column store corresponding to the row, the column store comprising a subset of values for a column of the table;
in response to a request to store a modified version of the row, adding (252), to a first plurality of records, a first record indicative of a logically deleted state for values in the column store corresponding to the row;
adding (253) the modified version of the row to the row store and modifying (254) the identifier to indicate that the column store does not contain a location corresponding to the modified version of the row;
adding (255), to a second plurality of records, a second record indicative of the modified version of the row not having been propagated to the column store;
identifying a propagation state of the modified version of the row in the row store based at least in part on locating the modified version of row in the second plurality of records;
storing the modified version of the row in the column store, wherein the modified version of the row in the column store is associated with information indicative of an invisible state for the modified version of the row in the column store;
storing, in the first plurality of records, a second record comprising a second identifier indicative of a location in the column store corresponding to the modified version of the row, the second record in the first plurality of records being indicative of a logically deleted state of the modified version of the row in the column store;
associating the modified version of the row in the column store with information indicative of a visible state in the column store in response to completion of a transaction pending at a time the second record was stored in the first plurality of records;
associating the modified version of the row in the row store with the second identifier indicative of a location in the column store corresponding to the modified version of the row; and
deleting the second record from the first plurality of records, wherein deleting the second record from the first plurality of records corresponds to reverting the logically deleted state of the modified version of the row in the column store.

9. The method of claim 8, wherein the second plurality of records comprises a row-oriented structure and is indicative of a plurality of rows that are logically included in the column store but have not been propagated to the column store.

10. The method of claim 8, further comprising:
selecting the row for propagation to the column store based at least in part on a frequency of requests associated with modifying the row; and
determining the frequency based at least in part on performing a linear regression performed on variables comprising a timestamp and a time value corresponding to the timestamp.

11. The method of any of claims 8 or 10, wherein associating the modified version of the row in the row store with the second identifier indicative of a location in the column store is not logged, further comprising recovering the second identifier based at least in part on locating the modified version of the row in the column store and associating the modified version of the row in the row store with the recovered second identifier.

12. The method of any of claims 8-11, wherein the first record comprises information indicative of a range of values in the column store that are in a logically deleted state.

13. A computer readable storage medium bearing instructions for operating a database management system with improved update performance in transactional and data warehouse applications, the computer readable storage medium storing thereon computer readable instructions that, when executed by one or more computing devices, cause the computing devices to:
in response to a request to store a modified version of a row of a table, add (252), to a first plurality of records, a first record indicative of a logically deleted state for values in a column store corresponding to the row, the column store maintained in non-volatile memory;
add (253) the modified version of the row to a row store maintained in a volatile memory and modify (254) an identifier to indicate that the column store does not contain a location corresponding to the modified version of the row, the identifier indicative of a location in the column store corresponding to the row; and
add (255), to a second plurality of records, a second record indicative of the modified version of the row not having been propagated to the column store;
identify a propagation state of the modified version of the row in the row store based at least in part on locating the modified version of row in the second plurality of records;
store the modified version of the row in the column store, wherein the modified version of the row in the column store is associated with information indicative of an invisible state for the modified version of the row in the column store;
store, in the first plurality of records, a second record comprising a second identifier indicative of a location in the column store corresponding to the modified version of the row, the second record in the first plurality of records being indicative of a logically deleted state of the modified version of the row in the column store;
associate the modified version of the row in the column store with information indicative of a visible state in the column store in response to completion of a transaction pending at a time the second record was stored in the first plurality of records;
associate the modified version of the row in the row store with the second identifier indicative of a location in the column store corresponding to the modified version of the row; and
remove the second record from the first plurality of records, wherein removing the second record from the first plurality of records corresponds to reverting the logically deleted state of the modified version of the row in the column store.

## Patentansprüche

1. Datenbankverwaltungssystem mit verbesserter Aktualisierungsleistung bei Transaktions- und Data-Warehouse-Anwendungen, wobei das System umfasst:
eine oder mehrere Rechnervorrichtungen, die, wenn sie aktiviert sind, eine Tabelle in einer Vielzahl an Strukturen, gespeichert in einem oder mehreren Speichern, pflegen, wobei die Vielzahl an Strukturen einen Zeilenspeicher und einen Spaltenspeicher umfasst, wobei der Zeilenspeicher eine Zeile der Tabelle umfasst, die mit einem Bezeichner verknüpft ist, der auf eine Position in dem Spaltenspeicher verweist, die der Zeile entspricht, wobei der Spaltenspeicher eine Teilmenge an Werten für eine Spalte der Tabelle umfasst:
einen oder mehrere Speicher mit darauf gespeicherten computerlesbaren Anweisungen, die, bei Ausführung mittels einer oder mehrerer Rechnervorrichtungen, das System mindestens veranlassen, zum:
Empfangen (251) einer Aufforderung, eine modifizierte Version der Zeile zu speichern;
Hinzufügen (252), zu einer ersten Vielzahl an Datensätzen (records), eines ersten Datensatzes, der auf einen logisch gelöschten Zustand für Werte in dem Spaltenspeicher verweist, die der Zeile entsprechen;
Hinzufügen (253) der modifizierten Version der Zeile zu dem Zeilenspeicher und Modifizieren (254) des Bezeichners, um anzugeben, dass der Spaltenspeicher keine Position enthält, die der modifizierten Version der Zeile entspricht;
Hinzufügen (255), zu einer zweiten Vielzahl an Datensätzen, eines zweiten Datensatzes, der auf die modifizierte Version der Zeile verweist, die nicht an den Spaltenspeicher übertragen worden ist;
Identifizieren eines Übertragungszustandes der modifizierten Version der Zeile in dem Zeilenspeicher basierend zumindest teilweise auf einem Lokalisieren der modifizierten Version der Zeile in der zweiten Vielzahl an Datensätzen;
Speichern der modifizierten Version der Zeile in dem Spaltenspeicher, wobei die modifizierte Version der Zeile in dem Spaltenspeicher mit Information verknüpft wird, die auf einen unsichtbaren Zustand für die modifizierte Version der Zeile in dem Spaltenspeicher verweist;
Speichern, in der ersten Vielzahl an Aufzeichnungen, eines zweiten Datensatzes, umfassend einen zweiten Bezeichner, der auf eine Position in dem Spaltenspeicher verweist, die der modifizierten Version der Zeile entspricht, wobei der zweite Datensatz in der ersten Vielzahl an Datensätzen auf einen logisch gelöschten Zustand der modifizierten Version der Zeile in dem Spaltenspeicher verweist;
Verknüpfen der modifizierten Version der Zeile in dem Spaltenspeicher mit Information, die auf einen sichtbaren Zustand in dem Spaltenspeicher verweist, als Reaktion auf den Abschluss einer Transaktion, die zu dem Zeitpunkt anstand, an dem der zweite Datensatz in der ersten Vielzahl an Datensätzen gespeichert wurde;
Verknüpfen der modifizierten Version der Zeile in dem Zeilenspeicher mit dem zweiten Bezeichner, der auf eine Position in dem Spaltenspeicher verweist, die der modifizierten Version der Zeile entspricht; und
Entfernen des zweiten Datensatzes aus der ersten Vielzahl an Datensätzen, wobei das Entfernen des zweiten Datensatzes aus der ersten Vielzahl an Datensätzen dem Rückgängig machen des logisch gelöschten Zustands der modifizierten Version der Zeile in dem Spaltenspeicher entspricht.

2. System nach Anspruch 1, wobei die zweite Vielzahl an Datensätzen eine zeilenorientierte Struktur umfasst und auf eine Vielzahl an Zeilen verweist, die logisch in dem Spaltenspeicher eingeschlossen sind, aber nicht an den Spaltenspeicher übertragen worden sind.

3. System nach Anspruch 1 oder 2, das des Weiteren einen oder mehrere Speicher mit darauf gespeicherten computerlesbaren Anweisungen umfasst, die, bei der Ausführung, das System mindestens veranlassen zum:
Auswählen (201) der Zeile zur Übertragung an den Spaltenspeicher basierend auf zumindest teilweise einer Häufigkeit von Aufforderungen, die mit dem Modifizieren der Zeile in Verbindung stehen; und
Bestimmen der Häufigkeit basierend zumindest teilweise auf einer Durchführung einer linearen Regression, durchgeführt an Variablen, die einen Zeitstempel und einem dem Zeitstempel entsprechenden Zeitwert umfassen.

4. System nach Anspruch 1, wobei das Verknüpfen der modifizierten Version der Zeile in dem Zeilenspeicher mit dem zweiten Bezeichner, der auf eine Position in dem Spaltenspeicher verweist, nicht aufgezeichnet wird, wobei das System des Weiteren einen oder mehrere Speicher mit darauf gespeicherten computerlesbaren Anweisungen umfasst, die bei der Ausführung, das System mindestens veranlassen zum:
Wiederherstellen des zweiten Bezeichners basierend zumindest teilweise auf einem Lokalisieren der modifizierten Version der Zeile in dem Spaltenspeicher und Verknüpfen der modifizierten Version der Zeile in dem Zeilenspeicher mit dem wiederhergestellten zweiten Bezeichner.

5. System nach einem der Ansprüche 1 bis 4, wobei der erste Datensatz Information umfasst, die auf einen Bereich an Werten in dem Spaltenspeicher verweist, die sich in einem logisch gelöschten Zustand befinden.

6. System nach einem der Ansprüche 1 bis 5, das des Weiteren einen oder mehrere Speicher mit darauf gespeicherten computerlesbaren Anweisungen umfasst, die, bei der Ausführung, das System mindestens veranlassen zum:
Verknüpfen einer Operation, durchgeführt an dem Zeilenspeicher und/oder dem Spaltenspeicher und/oder der ersten Vielzahl an Datensätzen und/oder der zweiten Vielzahl an Datensätzen, mit einer ersten Transaktion;
Verknüpfen der ersten Transaktion mit Information, die auf die erste von dem System initiierte Transaktion verweist; und
Veranlassen des Abbruchs der ersten Transaktion als Reaktion auf das Empfangen einer Aufforderung, auf die Zeile im Kontext einer zweiten, von einem Client initiierten Transaktion zuzugreifen und Ermitteln, dass die erste Transaktion nicht durchgeführt worden ist.

7. System nach einem der Ansprüche 1 bis 6, das des Weiteren einen oder mehrere Speicher mit darauf gespeicherten computerlesbaren Anweisungen umfasst, die, bei der Ausführung, das System mindestens veranlassen zum:
als Reaktion auf einen Beschluss, den Spaltenspeicher zu scannen, Durchführen einer Zuammenführungsoperation, basierend zumindest teilweise auf eine Zusammenführung von Werten in dem Spaltenspeicher, Information in der ersten Vielzahl an Datensätzen, die auf logisch gelöschte Zustände verweist, und Information in der zweiten Vielzahl an Datensätzen, die auf Zeilen verweist, die nicht an den Spaltenspeicher übertragen worden sind, wobei die Zusammenführungsoperation in Bezug auf einen Zeitstempel durchgeführt wird.

8. Verfahren für effiziente Aktualisierungen in Transaktions- und Data-Warehouse-Anwendungen, wobei das Verfahren umfasst:
Pflegen einer Tabelle in einer Vielzahl an Strukturen, gespeichert in einem oder mehreren Speichern, wobei die Vielzahl an Strukturen einen Zeilenspeicher und einen Spaltenspeicher umfasst, wobei der Zeilenspeicher eine Zeile einer Tabelle umfasst, die mit einem Bezeichner verknüpft ist, der auf eine Position in dem Spaltenspeicher verweist, die der Zeile entspricht, wobei der Spaltenspeicher eine Teilmenge an Werten für eine Spalte der Tabelle umfasst;
als Reaktion auf eine Aufforderung, eine modifizierte Version der Zeile zu speichern, Hinzufügen (252), zu einer ersten Vielzahl an Datensätzen, eines ersten Datensatzes, der auf einen logisch gelöschten Zustand für Werte in dem Spaltenspeicher, die der Zeile entsprechen, verweist;
Hinzufügen (253) der modifizierten Version der Zeile zu dem Zeilenspeicher und Modifizieren (254) des Bezeichners, um anzuzeigen, dass der Spaltenspeicher keine Position enthält, die der modifizierten Version der Zeile entspricht;
Hinzufügen (255), zu einer zweiten Vielzahl an Datensätzen, eines zweiten Datensatzes, der auf die modifizierte Version der Zeile, die nicht an den Spaltenspeicher übertragen wurde, verweist;
Identifizieren eines Übertragungszustandes der modifizierten Version der Zeile in dem Zeilenspeicher basierend zumindest teilweise auf einem Lokalisieren der modifizierten Version der Zeile in der zweiten Vielzahl an Datensätzen;
Speichern der modifizierten Version der Zeile in dem Spaltenspeicher, wobei die modifizierte Version der Zeile in dem Spaltenspeicher mit Information verknüpft wird, die auf einen unsichtbaren Zustand für die modifizierte Version der Zeile in dem Spaltenspeicher verweist;
Speichern, in der ersten Vielzahl an Datensätzen, eines zweiten Datensatzes, umfassend einen zweiten Bezeichner, der auf eine Position in dem Spaltenspeicher verweist, die der modifizierten Version der Zeile entspricht, wobei der zweite Datensatz in der ersten Vielzahl an Datensätzen auf einen logisch gelöschten Zustand der modifizierten Version der Zeile in dem Spaltenspeicher verweist;
Verknüpfen der modifizierten Version der Zeile in dem Spaltenspeicher mit Information, die auf einen sichtbaren Zustand in dem Spaltenspeicher als Reaktion auf den Abschluss einer Transaktion verweist, die zu dem Zeitpunkt anstand, an dem der zweite Datensatz in der ersten Vielzahl an Datensätzen gespeichert wurde;
Verknüpfen der modifizierten Version der Zeile in dem Zeilenspeicher mit dem zweiten Bezeichner, der auf eine Position in dem Spaltenspeicher verweist, die der modifizierten Version der Zeile entspricht; und
Löschen des zweiten Datensatzes aus der ersten Vielzahl an Datensätzen, wobei das Löschen des zweiten Datensatzes aus der ersten Vielzahl an Datensätzen dem Rückgängig machen des logisch gelöschten Zustands der modifizierten Version der Zeile in dem Spaltenspeicher entspricht.

9. Verfahren nach Anspruch 8, wobei die zweite Vielzahl an Datensätzen eine zeilenorientierte Struktur umfasst, und auf eine Vielzahl an Zeilen verweist, die logisch in dem Spaltenspeicher eingeschlossen sind, aber nicht an den Spaltenspeicher übertragen worden sind.

10. Verfahren nach Anspruch 8, des Weiteren umfassend:
Auswählen der Zeile zur Übertragen an den Spaltenspeicher basierend zumindest teilweise auf einer Häufigkeit von Aufforderungen, die mit der modifizierten Zeile in Verbindung stehen; und
Bestimmen der Häufigkeit, basierend zumindest teilweise auf der Durchführung einer linearen Regression, durchgeführt an Variablen, die einen Zeitstempel und einen Zeitwert umfassen, der dem Zeitstempel entspricht.

11. Verfahren nach einem der Ansprüche 8 oder 10, wobei das Verknüpfen der modifizierten Version der Zeile in dem Zeilenspeicher mit dem zweiten Bezeichner, der auf eine Position in dem Spaltenspeicher verweist, nicht aufgezeichnet wird, umfassend des Weiteren die Wiederherstellung des zweiten Bezeichners basierend zumindest teilweise auf einem Lokalisieren der modifizierten Version der Zeile in dem Spaltenspeicher, und das Verknüpfen der modifizierten Version der Zeile in dem Zeilenspeicher mit dem wiederhergestellten zweiten Bezeichner.

12. Verfahren nach einem der Ansprüche 8 bis 11, wobei der erste Datensatz Information umfasst, die auf einen Bereich aus Werten in dem Spaltenspeicher verweist, die sich in einem logisch gelöschten Zustand befinden.

13. Computerlesbares Speichermedium, das Anweisungen zum Betreiben eines Datenbankverwaltungssystems mit verbesserter Aktualisierungsleistung in Transaktions- und Data-Warehouse-Anwendungen trägt, wobei das computerlesbare Speichermedium darauf computerlesbare Anweisungen speichert, die, wenn sie von einer oder mehreren Rechnervorrichtungen ausgeführt werden, die Rechnervorrichtungen zu den nachstehenden Schritten veranlassen:
als Reaktion auf eine Aufforderung, eine modifizierte Version einer Zeile einer Tabelle zu speichern, Hinzufügen (252), zu einer ersten Vielzahl an Datensätzen, eines ersten Datensatzes, der auf einen logisch gelöschten Zustand für Werte in einem Spaltenspeicher verweist, die der Zeile entsprechen, wobei der Spaltenspeicher im nicht-flüchtigen Speicher gehalten wird;
Hinzufügen (253) der modifizierten Version der Zeile einem Zeilenspeicher, der in einem flüchtigen Speicher gehalten wird, und Modifizieren (254) eines Bezeichners, um anzuzeigen, dass der Spaltenspeicher keine Position enthält, die der modifizierten Version der Zeile entspricht, wobei der Bezeichner auf eine Position in dem Spaltenspeicher verweist, die der Zeile entspricht; und
Hinzufügen (255), zu einer zweiten Vielzahl an Datensätzen, eines zweiten Datensatzes, der auf die modifizierte Version der Zeile, die nicht an den Spaltenspeicher übertragen worden ist, verweist;
Identifizieren eines Übertragungszustandes der modifizierten Version der Zeile in dem Zeilenspeicher basierend zumindest teilweise auf einem Lokalisieren der modifizierten Version der Zeile in der zweiten Vielzahl an Datensätzen;
Speichern der modifizierten Version der Zeile in dem Spaltenspeicher, wobei die modifizierte Version der Zeile in dem Spaltenspeicher mit Information verbunden wird, die auf einen unsichtbaren Zustand für die modifizierte Version der Zeile in dem Spaltenspeicher verweist;
Speichern, in der ersten Vielzahl an Datensätzen, eines zweiten Datensatzes, umfassend einen zweiten Bezeichner, der auf eine Position in dem Spaltenspeicher verweist, die der modifizierten Version der Zeile entspricht, wobei der zweite Datensatz in der ersten Vielzahl an Datensätzen auf einen logisch gelöschten Zustand der modifizierten Version der Zeile in dem Spaltenspeicher verweist;
Verknüpfen der modifizierten Version der Zeile in dem Spaltenspeicher mit Information, die auf einen sichtbaren Zustand in dem Spaltenspeicher als Reaktion auf den Abschluss einer Transaktion verweist, die zu dem Zeitpunkt anstand, an dem der zweite Datensatz in der ersten Vielzahl an Datensätzen gespeichert wurde;
Verknüpfen der modifizierten Version der Zeile in dem Zeilenspeicher mit dem zweiten Bezeichner, der auf eine Position in dem Spaltenspeicher verweist, die der modifizierten Version der Zeile entspricht; und
Entfernen des zweiten Datensatzes aus der ersten Vielzahl an Datensätzen, wobei das Entfernen des zweiten Datensatzes aus der ersten Vielzahl an Datensätzen dem Rückgängig machen des logisch gelöschten Zustands der modifizierten Version der Zeile in dem Spaltenspeicher entspricht.

## Revendications

1. Système de gestion de base de données présentant des performances améliorées de mise à jour dans des applications transactionnelles et d'entrepôt de données, le système comprenant :
un ou plusieurs dispositifs informatiques qui, lorsqu'ils sont activés, entretiennent une table dans une pluralité de structures stockées sur une ou plusieurs mémoires, la pluralité de structures comprenant une mémoire en rangées et une mémoire en colonnes, la mémoire en rangées comprenant une rangée de la table associée à un identificateur montrant un emplacement dans la mémoire en colonnes correspondant à la rangée, la mémoire en colonnes comprenant un sous-ensemble de valeurs pour une colonne de la table,
une ou plusieurs mémoires comportant des instructions stockées pouvant être lues par ordinateur qui, lors de l'exécution par le ou les dispositifs informatiques, amènent le système au moins à :
recevoir (251) une requête pour stocker une version modifiée de la rangée,
ajouter (252) à une première pluralité d'enregistrements, un premier enregistrement indiquant un état de suppression logique pour des valeurs dans la mémoire en colonnes correspondant à la rangée,
ajouter (253) la version modifiée de la rangée à la mémoire en rangées, et modifier (254) l'identificateur pour indiquer que la mémoire en colonnes ne contient pas d'emplacement correspondant à la version modifiée de la rangée,
ajouter (255), à une seconde pluralité d'enregistrements, un second enregistrement indicatif de la version modifiée de la rangée qui n'a pas été propagée vers la mémoire en colonnes,
identifier l'état de propagation de la version modifiée de la rangée dans la mémoire en rangées au moins en partie sur la base de la localisation de la version modifiée de rangée dans la seconde pluralité d'enregistrements,
stocker la version modifiée de la rangée dans la mémoire en colonnes, la version modifiée de la rangée dans la mémoire en colonnes étant associée à des informations indicatives d'un état d'invisibilité pour la version modifiée de la rangée dans la mémoire en colonnes,
stocker, dans la première pluralité d'enregistrements, un second enregistrement comprenant un second identificateur indicatif d'un emplacement dans la mémoire en colonnes correspondant à la version modifiée de la rangée, le second enregistrement dans la première pluralité d'enregistrements indiquant un état de suppression logique de la version modifiée de la rangée dans la mémoire en colonnes,
associer la version modifiée de la rangée dans la mémoire en colonnes à des informations indiquant un état de visibilité dans la mémoire en colonnes en réponse à l'achèvement d'une transaction en cours à l'instant où le second enregistrement a été stocké dans la première pluralité d'enregistrements,
associer la version modifiée de la rangée dans la mémoire en rangées au second identificateur indiquant un emplacement dans la mémoire en colonnes correspondant à la version modifiée de la rangée, et
supprimer le second enregistrement de la première pluralité d'enregistrements, la suppression du second enregistrement de la première pluralité d'enregistrements correspondant à l'inversion de l'état de suppression logique de la version modifiée de la rangée dans la mémoire en colonnes.

2. Système selon la revendication 1, dans lequel la seconde pluralité d'enregistrements comprend une structure orientée sur les rangées, et elle indique une pluralité de rangées qui sont incluses logiquement dans la mémoire en colonnes mais qui n'ont pas été propagées vers la mémoire en colonnes.

3. Système selon la revendication 1 ou la revendication 2, comprenant en outre une ou plusieurs mémoires comportant des instructions stockées pouvant être lues par ordinateur qui, lors de l'exécution, amènent le système au moins à :
Sélectionner (201) la rangée en vue d'une propagation vers la mémoire en colonnes sur la base au moins en partie de la fréquence des requêtes associées à la modification de la rangée, et
déterminer la fréquence sur la base au moins en partie de l'exécution d'une régression linéaire effectuée sur des variables comprenant un marqueur temporel et une valeur de temps correspondant au marqueur temporel.

4. Système selon la revendication 1, dans lequel l'association de la version modifiée de la rangée dans la mémoire en rangées avec le second identificateur indiquant un emplacement dans la mémoire en colonnes n'est pas consignée, le système comprenant en outre une ou plusieurs mémoires comportant des instructions stockées pouvant être lues par ordinateur qui, lors de l'exécution, amènent le système au moins à :
récupérer le second identificateur sur la base au moins en partie de la localisation de la version modifiée de la rangée dans la mémoire en colonnes et de l'association de la version modifiée de la rangée dans la mémoire en rangées avec le second identificateur récupéré.

5. Système selon l'une quelconque des revendications 1 à 4, dans lequel le premier enregistrement comprend des informations indiquant la plage de valeurs, dans la mémoire en colonnes, qui se trouvent à l'état de suppression logique.

6. Système selon l'une quelconque des revendications 1 à 5, comprenant en outre une ou plusieurs mémoires comportant des instructions stockées pouvant être lues par ordinateur qui, lors de l'exécution, amènent le système au moins à :
associer à une première transaction une opération effectuée sur au moins l'une de la mémoire en rangées, de la mémoire en colonnes, de la première pluralité d'enregistrements ou de la seconde pluralité d'enregistrements,
associer la première transaction à des informations indicatives du lancement de la première transaction par le système, et
amener l'abandon de la première transaction en réponse à la réception d'une demande d'accès à la rangée dans le contexte d'une seconde transaction lancée par un client, et déterminer que la première transaction n'a pas été exécutée.

7. Système selon l'une quelconque des revendications 1 à 6, comprenant en outre une ou plusieurs mémoires comportant des instructions stockées pouvant être lues par ordinateur qui, lors de l'exécution, amènent le système au moins à :
effectuer une opération de fusion, en réponse à la détermination de balayage de la mémoire en colonnes, au moins en partie sur des valeurs de fusion dans la mémoire en colonnes, des informations dans la première pluralité d'enregistrements indicatives d'états de suppression logique, et des informations dans la seconde pluralité d'enregistrements indicatives du défaut de propagation de rangées vers la mémoire en colonnes, l'opération de fusion étant effectuée par rapport à un marqueur temporel.

8. Procédé autorisant des mises à jour efficace dans des applications transactionnelles et d'entrepôt de données, le procédé comprenant :
la tenue à jour d'une table dans une pluralité de structures stockées sur une ou plusieurs mémoires, la pluralité de structures comprenant une mémoire en rangées et une mémoire en colonnes, la mémoire en rangées comprenant une rangée de la table associée à un identificateur montrant un emplacement dans la mémoire en colonnes correspondant à la rangée, la mémoire en colonnes comprenant un sous-ensemble de valeurs pour une colonne de la table,
en réponse à une requête demandant de stocker une version modifiée de la rangée, l'ajout (252), à une première pluralité d'enregistrements, d'un premier enregistrement indiquant un état de suppression logique pour des valeurs dans la mémoire en colonnes correspondant à la rangée,
l'ajout (253) de la version modifiée de la rangée à la mémoire en rangées, et la modification (254) de l'identificateur pour indiquer que la mémoire en colonnes ne contient pas d'emplacement correspondant à la version modifiée de la rangée,
l'ajout (255), à une seconde pluralité d'enregistrements, d'un second enregistrement indicatif de la version modifiée de la rangée qui n'a pas été propagée vers la mémoire en colonnes,
l'identification de l'état de propagation de la version modifiée de la rangée dans la mémoire en rangées au moins en partie sur la base de la localisation de la version modifiée de rangée dans la seconde pluralité d'enregistrements,
le stockage de la version modifiée de la rangée dans la mémoire en colonnes, la version modifiée de la rangée dans la mémoire en colonnes étant associée à des informations indicatives d'un état d'invisibilité pour la version modifiée de la rangée dans la mémoire en colonnes,
le stockage, dans la première pluralité d'enregistrements, d'un second enregistrement comprenant un second identificateur indicatif d'un emplacement dans la mémoire en colonnes correspondant à la version modifiée de la rangée, le second enregistrement dans la première pluralité d'enregistrements indiquant un état de suppression logique de la version modifiée de la rangée dans la mémoire en colonnes,
l'association de la version modifiée de la rangée dans la mémoire en colonnes à des informations indiquant un état de visibilité dans la mémoire en colonnes en réponse à l'achèvement d'une transaction en cours à l'instant où le second enregistrement a été stocké dans la première pluralité d'enregistrements,
l'association de la version modifiée de la rangée dans la mémoire en rangées au second identificateur indiquant un emplacement dans la mémoire en colonnes correspondant à la version modifiée de la rangée, et
la suppression du second enregistrement de la première pluralité d'enregistrements, la suppression du second enregistrement de la première pluralité d'enregistrements correspondant à l'inversion de l'état de suppression logique de la version modifiée de la rangée dans la mémoire en colonnes.

9. Procédé selon la revendication 8, dans lequel la seconde pluralité d'enregistrements comprend une structure orientée sur les rangées, et elle indique une pluralité de rangées qui sont incluses logiquement dans la mémoire en colonnes mais qui n'ont pas été propagées vers la mémoire en colonnes.

10. Procédé selon la revendication 8, comprenant en outre :
la sélection de la rangée en vue d'une propagation vers la mémoire en colonnes sur la base au moins en partie de la fréquence des requêtes associées à la modification de la rangée, et
la détermination de la fréquence sur la base au moins en partie de l'exécution d'une régression linéaire effectuée sur des variables comprenant un marqueur temporel et une valeur de temps correspondant au marqueur temporel.

11. Procédé selon l'une quelconque des revendications 8 ou 10, dans lequel l'association de la version modifiée de la rangée dans la mémoire en rangées avec le second identificateur indiquant un emplacement dans la mémoire en colonnes n'est pas consignée, le procédé comprenant en outre la récupération du second identificateur sur la base au moins en partie de la localisation de la version modifiée de la rangée dans la mémoire en colonnes et de l'association de la version modifiée de la rangée dans la mémoire en rangées avec le second identificateur récupéré.

12. Procédé selon l'une quelconque des revendications 8 à 11, dans lequel le premier enregistrement contre les informations indicatives de la plage de valeurs dans la mémoire en colonnes qui se trouvent à l'état de suppression logique.

13. Support de stockage pouvant être lu par ordinateur transportant des instructions permettant de mettre en œuvre un système de gestion de base de données présentant des performances améliorées de mise à jour dans des applications transactionnelles et d'entrepôt de données, le support de stockage pouvant être lu par ordinateur stockant des instructions pouvant être lues par ordinateur qui, lorsqu'elles sont exécutées par un ou plusieurs dispositifs informatiques, amènent les dispositifs informatiques à :
en réponse à une requête demandant de stocker une version modifiée de la rangée d'une table, ajouter (252) à une première pluralité d'enregistrements, un premier enregistrement indiquant un état de suppression logique pour des valeurs dans une mémoire en colonnes correspondant à la rangée, la mémoire en colonnes étant tenue à jour dans une mémoire non volatile,
ajouter (253) la version modifiée de la rangée à une mémoire en rangées tenue à jour dans une mémoire volatile, et modifier (254) un identificateur pour indiquer que la mémoire en colonnes ne contient pas d'emplacement correspondant à la version modifiée de la rangée, l'identificateur indiquant un emplacement dans la mémoire en colonnes correspondant à la rangée, et
ajouter (255), à une seconde pluralité d'enregistrements, un second enregistrement indicatif de la version modifiée de la rangée qui n'a pas été propagée vers la mémoire en colonnes,
identifier l'état de propagation de la version modifiée de la rangée dans la mémoire en rangées au moins en partie sur la base de la localisation de la version modifiée de rangée dans la seconde pluralité d'enregistrements,
stocker la version modifiée de la rangée dans la mémoire en colonnes, la version modifiée de la rangée dans la mémoire en colonnes étant associée à des informations indicatives d'un état d'invisibilité pour la version modifiée de la rangée dans la mémoire en colonnes,
stocker, dans la première pluralité d'enregistrements, un second enregistrement comprenant un second identificateur indicatif d'un emplacement dans la mémoire en colonnes correspondant à la version modifiée de la rangée, le second enregistrement dans la première pluralité d'enregistrements indiquant un état de suppression logique de la version modifiée de la rangée dans la mémoire en colonnes,
associer la version modifiée de la rangée dans la mémoire en colonnes à des informations indiquant un état de visibilité dans la mémoire en colonnes en réponse à l'achèvement d'une transaction en cours à l'instant où le second enregistrement a été stocké dans la première pluralité d'enregistrements,
associer la version modifiée de la rangée dans la mémoire en rangées au second identificateur indiquant un emplacement dans la mémoire en colonnes correspondant à la version modifiée de la rangée, et
supprimer le second enregistrement de la première pluralité d'enregistrements, la suppression du second enregistrement de la première pluralité d'enregistrements correspondant à l'inversion de l'état de suppression logique de la version modifiée de la rangée dans la mémoire en colonnes.
